**Europäisches Patentamt**

(19) **European Patent Office**

**Office européen des brevets**

(11) Veröffentlichungsnummer: **0 038 316**
**B1**

(12) **EUROPÄISCHE PATENTSCHRIFT**

(45) Veröffentlichungstag der Patentschrift:
02.03.83

(21) Anmeldenummer: **81890044.1**

(22) Anmeldetag: **13.03.81**

(51) Int. Cl.³: **F 16 H 9/18**, F 16 H 11/06,
B 62 M 9/06

(54) Antriebsvorrichtung für Leichtmotorräder od.dgl.

(30) Priorität: **10.04.80 AT 1935/80**

(43) Veröffentlichungstag der Anmeldung:
**21.10.81 Patentblatt 81/42**

(45) Bekanntmachung des Hinweises auf die Patenterteilung:
**02.03.83 Patentblatt 83/9**

(84) Benannte Vertragsstaaten:
**DE FR IT**

(56) Entgegenhaltungen:
**DE-B-1 001 901**
**DE-C-184 830**
**DE-C-960 066**
**DE-C-961 420**
**FR-A-429 832**
**GB-A-5 679**
**GB-A-26 653**
**GB-A-754 280**
**US-A-2 512 816**
**US-A-2 651 210**
**US-A-3 884 316**

(73) Patentinhaber: **Steyr-Daimler-Puch Aktiengesellschaft, Kärntnerring 7, A-1010 Wien (AT)**

(72) Erfinder: **Steinhofer, Konrad, Auf der Murwiese 9, A-8041 Graz (AT)**

(74) Vertreter: **Hübscher, Gerhard, Dipl.-Ing. et al, Patentanwälte Dipl.-Ing. Gerhard Hübscher Dipl.-Ing. Helmut Hübscher Dipl.-Ing. Heiner Hübscher Spittelwiese 7, A-4020 Linz (AT)**

BUNDESDRUCKEREI BERLIN

Antriebsvorrichtung für Leichtmotorräder od. dgl.

Die Erfindung bezieht sich auf eine Antriebsvorrichtung für Leichtmotorräder od. dgl. mit einem stufenlos verstellbaren Kegelscheiben-Umschlingungsgetriebe, über das der Motor auch angeworfen wird und be' dem die eine Kegelscheibe des beim Anwerfen treibenden Kegelscheibenpaares axial festgelegt und die andere Kegelscheibe durch Federkraft im Sinne der Verengung des Keilspaltes verschiebbar ist.

Bei solchen Kegelscheiben-Umschlingungsgetrieben besteht das zweite während der Fahrt treibende Kegelscheibenpaar aus einer axial festgelegten Kegelscheibe und aus einer mit Hilfe von Fliehgewichten im Sinne einer Verengung des Keilspaltes verschiebbaren Kegelscheibe. Nimmt die Drehzahl des während der Fahrt treibenden Kegelscheibenpaares zu, so wandern die Fliehgewichte auswärts, und es wird mit Hilfe der verschiebbaren Kegelscheibe der Keilspalt verengt, so daß der Keilriemen zu einem größeren Durchmesser des Kegelscheibenpaares gedrückt wird. Da die Länge des Keilriemens unveränderbar ist, wird dabei bei dem während der Fahrt getriebene Kegelscheibenpaar der Keilspalt gegen die dort wirkende Federkraft vergrößert, was die bei steigender Drehzahl des treibenden Kegelscheibenpaares gewünschte Verringerung der Gesamtübersetzung zur Folge hat.

Beim Anwerfen des Motors über das Kegelscheiben-Umschlingungsgetriebe ist, falls ohne Dekompressor gearbeitet wird, der Startstoß häufig so groß, daß der Keilriemen in den Keilspalt zwischen den Kegelscheiben des nunmehr treibenden, im Normalbetrieb aber getriebenen Kegelradpaares hineingezogen wird. Da sich das andere Kegelscheibenpaar mit den Fliehgewichten noch nicht dreht, bleibt der Keilriemen im Keilspalt dieses Kegelscheibenpaares auf kleinem Durchmesser und wird locker. Er rutscht durch und die Übersetzung vom Pedal od. dgl. zur Kurbelwelle wird stark verringert. Durch die entstehende Reibung wird Leistung vernichtet, und es kommt zu einer Unterbrechung des Kraftflusses.

Um diesen Nachteil beim Starten über ein stufenlos regelbares Keilriem- -Umschlingungsgetriebe zu vermeiden, is es bereits bekannt, das Kegelscheiben-Umschlingungsgetriebe während des Startvorgangs mit Hilfe von Zahnrädern und einer entsprechenden Kupplung zu überbrücken (AT-B-213 258), was aber zu einer vergleichsweise aufwendigen Konstruktion mit zusätzlichen Zahnrädern und Kupplungsteilen zwingt.

Somit liegt der Erfindung die Aufgabe zugrunde, diese Mängel zu beseitigen und eine Antriebsvorrichtung der eingangs geschilderten Art zu schaffen, die bei verhältnismäßig einfacher Konstruktion bzw. mit einfachen konstruktiven Mitteln eine Lockerung des Keilriemens beim Anwerfen über das Kegelscheiben-Umschlingungsgetriebe sicher verhindert.

Die Erfindung löst die gestellte Aufgabe dadurch, daß das beim Anwerfen des Motors treibende Kegelscheibenpaar für die verschiebbare Scheibe eine das Verschieben während des Anwerfens hindernde Sperre aufweist, die durch Federkraft in Sperrstellung gehalten und durch Fliehkraft lösbar ist.

Da die sonst verschiebbare Scheibe durch die Sperre an einer Bewegung in Achsrichtung gehindert wird, kann sich der Keilspalt zwischen den beiden Scheiben nicht vergrößern. Damit wird aber auch verhindert, daß der Keilriemen in den Keilspalt hineingezogen und gelockert wird. Es wird also eine möglichst hohe Kurbelwellen-Startdrehzahl und damit eine entsprechende Startfreudigkeit erreicht. Der Keilriemen überträgt somit die volle aufzubringende Startleistung.

Bei einem Kegelscheiben-Umschlingungsgetriebe, bei dem die Nabe der axial festgelegten Scheibe des beim Anwerfen des Motors treibenden Kegelscheibenpaares die Nabe der verschiebbaren Scheibe übergreift, wird eine besonders zweckmäßige Konstruktion dadurch erreicht, daß die Sperre aus einem in der Nabe der axial festgelegten Scheibe radial verschiebbar gelagerten und in der Sperrstellung in eine Umfangsausnehmung der Nabe der verschiebbaren Scheibe einragenden Sperrstück besteht, das als Fliehgewicht ausgebildet ist und an dem eine radial einwärts wirkende Feder angreift. In der Ruhestellung und bei noch geringer Drehzahl dient das Sperrstück als Kupplungsstück, das die Naben der beiden Scheiben verbindet. Sobald sich aber die Drehzahl erhöht, wirkt das Sperrstück als Fliehgewicht, kommt durch seine radiale Auswärtsbewegung außer Eingriff mit der Nabe der verschiebbaren Scheibe und diese wird frei bewegbar, um die selbständige stufenlose Regelung des Kegelscheiben-Umschlingungsgetriebes bei fahrendem Fahrzeug bzw. laufendem Motor nicht zu behindern.

Die Umfangsausnehmung der Nabe erstreckt sich über einen größeren Winkel als das Sperrstück, das Sperrstück hat also in der Umfangsausnehmung in Umfangsrichtung ein entsprechendes Spiel, was notwendig ist, um Toleranzen auszugleichen und ein sicheres Eingreifen des Sperrstückes auch bei gegenseitiger Verdrehung der Naben der beiden Scheiben zu gewährleisten.

Besonders zweckmäßig ist es, wenn das Sperrstück die Nabe der axial festgelegten Scheibe radial durchsetzt und an ihm außen eine Ringfeder anliegt, die die Nabe mit Abstand umschließt und deren Enden in einer an der Nabe diametral gegenüber dem Sperrstück angeformten Öse eingehakt sind. Bei einer solchen als Biegefeder wirkenden Ringfeder genügen vergleichsweise geringe Kräfte, um das Sperrstück radial auswärts in die Lösestellung zu bewegen. Das Sperrstück einerseits und die Öse andererseits können leicht so ausgebildet werden, daß sich eine günstige Massenverteilung und keine Unwucht ergibt. Da zwischen der Ringfeder und dem Nabenumfang ein Abstand vorhanden ist, kann sich die Ringfeder bei Belastung oval verformen.

In weiterer Ausbildung der Erfindung ist beiderseits des Sperrstückes je ein den Federweg der Ringfeder begrenzender Endanschlag angeordnet, der auch dafür sorgt, daß das Sperrstück selbst seine Führung in der Nabe der axial festgelegten Scheibe nicht verliert und sich daher nicht verkanten kann.

Schließlich weist das Sperrstück eine in Umfangsrichtung verlaufende Nut für den Eingriff der Ringfeder auf, so daß diese keiner weiteren Führung bedarf, die die Leichtgängigkeit einschränken würde.

In der Zeichnung ist der Erfindungsgegenstand in einem Ausführungsbeispiel dargestellt, und zeigt

Fig. 1 das bei Normalbetrieb getriebene und beim Anwerfen des Motors treibende Kegelscheibenpaar eines Kegelscheiben-Umschlingungsgetriebes im Axialschnitt und

Fig. 2 im Querschnitt nach der Linie II-II der Fig. 1 im kleineren Maßstab.

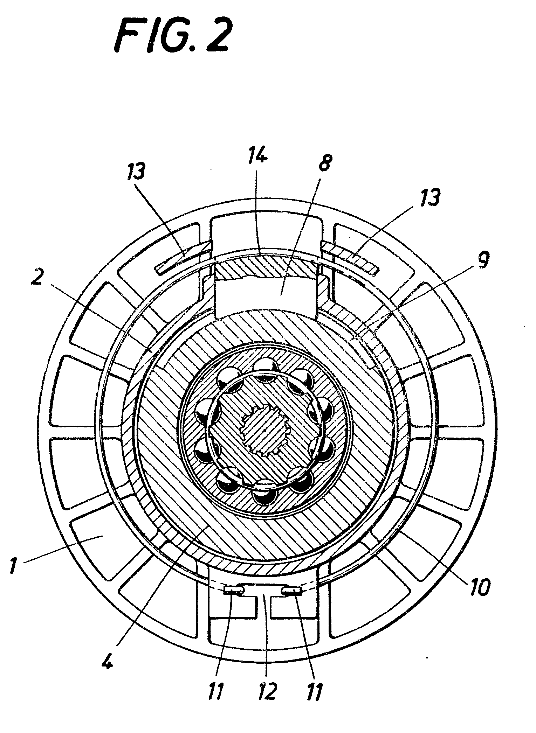

Die Kegelscheibe 1 mit ihrer Nabe 2 ist axial festgelegt. Die zweite Kegelscheibe 3 mit ihrer Nabe 4 ist durch die Kraft der Feder 5 im Sinne einer Verengung des zwischen den beiden Kegelscheiben 1, 3 gebildeten Keilspaltes 6 verschiebbar, wobei der Keilriemen 7 verschieden tief in den Keilspalt 6 eindringt. Die Nabe 2 der axial festgelegten Scheibe 1 übergreift die Nabe 4 der verschiebbaren Scheibe 3, wobei in der Nabe 2 ein Sperrstück 8 radial verschiebbar gelagert ist, das in Ruhestellung in eine Umfangsausnehmung 9 der Nabe 4 einragt und als Fliehgewicht ausgebildet ist. Das Sperrstück 8 durchsetzt die Nabe 2 der axial festgelegten Scheibe 1, wobei am Sperrstück 8 außen eine die Nabe 2 mit Abstand umschließende Ringfeder 10 anliegt, deren Enden 11 in einer an der Nabe 2 diametral gegenüber dem Sperrstück 8 angeformten Öse 12 eingehakt sind. Aus Fig. 2 ist ersichtlich, daß sich die Umfangsausnehmung 9 der Nabe 4 über einen größeren Winkel als das Sperrstück 8 erstreckt.

Beiderseits des Sperrstückes 8 ist je ein den Federweg der Ringfeder 10 begrenzender Endanschlag 13 vorgesehen. Das Sperrstück 8 weist für die Ringfeder 10 eine in Umfangsrichtung verlaufende etwa V-förmige Nut 14 auf.

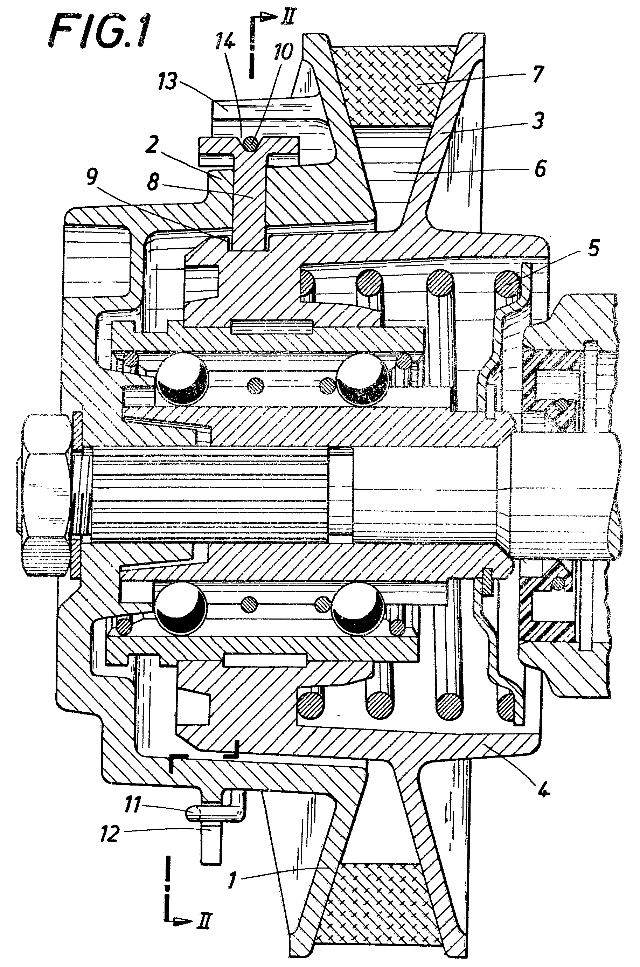

Das Kegelscheibenpaar 1, 3 ist über den Keilriemen 7 mit einem zweiten Kegelscheibenpaar verbunden, das während der Fahrt treibt und aus einer axial festgelegten Kegelscheibe sowie aus einer mit Hilfe von Fliehgewichten im Sinne einer Verengung des Keilspaltes verschiebbaren Kegelscheibe besteht. Beim Anwerfen des Motors wirkt dagegen das dargestellte Kegelscheibenpaar 1, 3, das während des Betriebes getrieben wird, als treibendes Kegelscheibenpaar. In den Fig. 1 und 2 ist die Ruhestellung bzw. die Stellung bei Beginn des Anwerfens des Motors dargestellt. Es ist ersichtlich, daß die axial verschiebbare Kegelscheibe 3 durch das in die Ausnehmung 9 eingreifende Sperrstück 8, das unter der einwärts gerichteten Wirkung der Ringfeder 10 steht, an Axialverschiebung so lange gehindert ist, bis sich bei entsprechender Drehzahl das Sperrstück 8 als Fliehgewicht gegen die Kraft der Feder 10 nach außen bewegt und die Nabe 4 bzw. die Kegelscheibe 3 freigibt, so daß sich der Keilspalt 6 weiten kann.

**Patentansprüche**

1. Antriebsvorrichtung für Leichtmotorräder od. dgl. mit einem stufenlos verstellbaren Kegelscheiben-Umschlingungsgetriebe, über das der Motor auch angeworfen wird und bei dem die eine Kegelscheibe (1) des beim Anwerfen treibenden Kegelscheibenpaares axial festgelegt und die andere Kegelscheibe (3) durch Federkraft im Sinne der Verengung des Keilspaltes (6) verschiebbar ist, dadurch gekennzeichnet, daß das beim Anwerfen des Motors treibende Kegelscheibenpaar (1, 3) für die verschiebbare Scheibe (3) eine das Verschieben während des Anwerfens hindernde Sperre (8) aufweist, die durch Federkraft in Sperrstellung gehalten und durch Fliehkraft lösbar ist.

2. Antriebsvorrichtung nach Anspruch 1, bei der die Nabe (2) der axial festgelegten Scheibe (1) des beim Anwerfen des Motors treibenden Kegelscheibenpaares die Nabe (4) der verschiebbaren Scheibe (3) übergreift, dadurch gekennzeichnet, daß die Sperre aus einem in der Nabe (2) der axial festgelegten Scheibe (1) radial verschiebbar gelagerten und in der Sperrstellung in eine Umfangsausnehmung (9) der Nabe (4) der verschiebbaren Scheibe (3) einragenden Sperrstück (8) besteht, das als Fliehgewicht ausgebildet ist und an dem eine radial einwärts wirkende Feder (10) angreift.

3. Antriebsvorrichtung nach den Ansprüchen 1 und 2, dadurch gekennzeichnet, daß sich die Umfangsausnehmung (9) der Nabe (4) über einen größeren Winkel als das Sperrstück (8) erstreckt.

4. Antriebsvorrichtung nach den Ansprüchen 1 bis 3, dadurch gekennzeichnet, daß das Sperrstück (8) die Nabe (2) der axial festgelegten Scheibe (1) radial durchsetzt und an ihm außen eine Ringfeder (10) anliegt, die die Nabe (2) mit Abstand umschließt und deren Enden (11) in einer an der Nabe (2) diametral gegenüber dem Sperrstück (8) angeformten Öse (12) eingehakt sind.

5. Antriebsvorrichtung nach den Ansprüchen 1 bis 4, dadurch gekennzeichnet, daß beiderseits des Sperrstückes (8) je ein den Federweg der Ringfeder (10) begrenzender Endanschlag (13) angeordnet ist.

6. Antriebsvorrichtung nach den Ansprüchen 1 bis 5, dadurch gekennzeichnet, daß das Sperrstück (8) eine in Umfangsrichtung verlaufende Nut (14) für den Eingriff der Ringfeder (10) aufweist.

## Claims

1. Drive means for lightweight motorcycles or the like, comprising an infinitely adjustable cone pulley belt drive, by which the engine is also started and in which one cone pulley (1) of the pair or cone pulleys for driving the starting of the engine is axially fixes and the other cone pulley (3) is displaceable by spring force in order to narrow the wedge-shaped gap (6), characterized in that the pair of cone pulleys (1, 3) which drive during the starting of the engine comprises for the displaceable pulley (3) a locking device (8), which hinders the displacement during the starting and is held in locking position by spring force and is adapted to be disabled by centifugal force.

2. Drive means according to claim 1, in which the hub (2) of the axially fixed pulley (1) of that pair of cone pulleys which drive during the starting of the engine overlies and engages the hub (4) of the displaceable pulley (3), characterized in that the locking device consists of a locking member (8), which is radially displaceably mounted in the hub (2) of the axially fixes pulley (1) and in its locking position enters a recess (9) in the hub (4) of the displaceable pulley (3) and constitutes a flyweight and is acted upon by a radially inwardly acting spring (10).

3. Drive means according to claims 1 and 2, characterized in that the peripheral recess (9) of the hub (4) extends around a larger angle than the locking member (8).

4. Drive means according to claims 1 to 3, characterized in that the locking member (8) extends radially through the hub (2) of the axially fixed pulley (1) and is engaged on the outside by an annular spring (10), which surrounds and is spaced around the hub (2) and has ends (11) which are hocked into an eyelet (12), which is integrally formed with the hub (2) and diametrically opposite to the locking member (8).

5. Drive means according to claims 1 to 4, characterized in that an end stop (13) for limiting the excursion of the annular spring (10) is disposed on each side of the locking member (8).

6. Drive means according to claims 1 to 5, characterized in that the locking member (8) has a peripherally extending groove (14) for receiving the annular spring (10).

## Revendications

1. Dispositif de propulsion pour motocycles légers ou véhicules similaires, comportant un mécanisme à enserrement de poulies coniques réglable de façon continue par l'intermédiaire duquel on fait aussi démarrer le moteur et dans lequel l'une des poulies coniques (1) de la paire de poulies coniques, qui entraîne lors du démarrage, est fixée acialement et l'autre poulie conique (3) peut coulisser sous une force de ressort dans le sens d'un rétrécissement de l'interstice cunéiforme (6), caractérisé par le fait que la paire de poulies coniques (1, 3), qui entraîne lors du démarrage du moteur, présente pour la poulie coulissante (3) un blocage (8) qui empêche le coulissement pendant le démarrage et qui est maintenu en position bloquée par une force de ressort et peut être libéré par force centrifuge.

2. Dispositif de propulsion selon la revendication 1, dans lequel le moyeu (2) de la poulie fixée axialement (1) de la paire de poulies coniques, qui entraîne lors du démarrage du moteur, recouvre le moyeu (4) de la poulie coulissante (3), caractérisé par le fait que le blocage est formé d'un élément de blocage (8), conçu sous forme de masselotte, monté de manière à pouvoir coulisser radialement dans le moyeu (2) de la poulie fixée axialement (1) et pénétrant, dans la position de blocage, dans un évidement circonférentiel (9) du moyeu (4) de la poulie coulissante (3) et auquel s'applique un ressort (10) agissant radialement vers l'intérieur.

3. Dispositif de propulsion selon les revendications 1 et 2, caractérisé par le fait que l'évidement circonférentiel (9) du moyeu (4) s'étend sur un plus grand angle que l'élément de blocage (8).

4. Dispositif de propulsion selon les revendications 1 à 3, caractérisé par le fait que l'élément de blocage (8) traverse radialement le moyeu (2) de la poulie fixée axialement (1) et que, contre l'élément (8), s'applique extérieurement un ressort annulaire (10) qui entoure le moyeu (2) avec espacement et dont les extrémités (11) sont accrochées à un oeillet (12) formé sur le moyeu (2) en un point diamétralement opposé à l'élément de blocage (8).

5. Dispositif de propulsion selon les revendications 1 à 4, caractérisé par le fait que de chaque côté de l'élément de blocage (8) est disposée une butée de fin de course (13) limitant la course du ressort annulaire (10).

6. Dispositif de propulsion selon les revendications 1 à 5, caractérisé par le fait que l'élément de blocage (8) présente une rainure dirigée circonférentiellement (14) pour l'engagement du ressort annulaire (10).

FIG.1

# FIG. 2